Europäisches Patentamt

European Patent Office

Office européen des brevets

(11) Veröffentlichungsnummer: **0 319 984 B1**

(12) **EUROPÄISCHE PATENTSCHRIFT**

(45) Veröffentlichungstag der Patentschrift: **18.03.92**

(51) Int. Cl.⁵: **A23L 1/236**, A23L 1/212

(21) Anmeldenummer: **88120559.5**

(22) Anmeldetag: **08.12.88**

(54) Süssungsmittel.

(30) Priorität: **10.12.87 DE 3741961**
**25.11.88 DE 3839869**

(43) Veröffentlichungstag der Anmeldung:
**14.06.89 Patentblatt 89/24**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**DE-A- 2 560 544**
**DE-B- 1 255 467**
**US-A- 3 761 288**

**CHEMICAL ABSTRACTS, Band 106, Nr. 21,
Mai 1987, Seite 597, Zusammenfassung Nr.
174835y, Columbus, Ohio, US; M. RAGAB :
"Characteristics of apricot jam sweetened
with saccharin and xylitol", & FOOD CHEM.
1987, 23(1), 55-64**

**L. O'BRIEN NADORS et al.: "Alternative
Sweeteners", 1986, Seite 53, Marcel Dekker,
Inc., New York, US**

(73) Patentinhaber: **RUDOLF WILD GmbH & CO. KG
Rudolf-Wild-Strasse 4-6
W-6904 Eppelheim-Heidelberg(DE)**

(72) Erfinder: **Wild, Rainer, Dr.
Steigerweg 57B
W-6900 Heidelberg(DE)**

(74) Vertreter: **Patentanwälte Grünecker, Kinkeldey, Stockmair & Partner
Maximilianstrasse 58
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 319 984 B1

**Beschreibung**

Die Erfindung bezieht sich auf eine Süßungsmittel mit verbessertem saccharoseähnlichem Geschmack, ein daraus hergestelltes Trockenprodukt sowie ein Verfahren zu ihrer Herstellung und ihre Verwendung.

Synthetische Süßstoffe mit geringem Nährwert werden in zunehmendem Maße anstelle von Zucker zur Verminderung der Kalorienzufuhr, aus diätetischen oder medizinischen Gründen verwendet. Zur Zeit sind neben dem seit langem bekannten Saccharin und Cyclamat, Aspartam (L-Aspartyl-L-phenylalaninmethylester) und Acesulfam-K (Kaliumsalz von 6-Methyl-1,2,3-oxathiazin-4(3H)on-2,2-dioxid) die einzigen synthetischen Süßstoffe von Bedeutung. Im Gegensatz zu Zuckeraustauschstoffen, wie Fructose, Xylit, Sorbit und Mannit, sind sie keine Energieträger und werden deshalb zunehmend in kalorienarmen Lebensmitteln eingesetzt.

Ein wichtiges Kriterium dieser Süßstoffe ist die Süßkraft, die im Vergleich zu Saccharose wesentlich stärker ist. Die Saccharine und Cyclamate besitzen jedoch den Nachteil, daß sie einen bitteren Nachgeschmack im Mund hinterlassen. Aspartam weist zwar einen sehr guten Geschmack auf, besitzt jedoch nur eine begrenzte Stabilität. Acesulfam-K ist nicht ganz so süß wie Aspartam, jedoch haltbarer.

Es wurde bereits versucht, diese nachteiligen Eigenschaften durch Mischungen von Süßstoffen untereinander zu beseitigen, wie in der DE-PS 25 60 544 beschrieben. Süßstoffmischungen werden besonders deshalb verwendet, weil in diesen der Süßgeschmack häufig synergistisch verstärkt ist, wodurch gegenüber den reinen Süßstoffen eine gewisse Stoffersparnis erzielt werden kann.

Ein weiterer Grund für die Verwendung von Süßstoffmischungen besteht darin, daß einige der bekannten Süßstoffe ihrer Süße auf der Zunge stark verzögert entfalten oder aber einen sehr schnellen Süßeeindruck bewirken, der jedoch auch schnell abflacht. Dieser Nachteil läßt sich durch Beimischen von Süßstoffen mit länger anhaltender Süße oder gegebenenfalls auch durch Mischung mit natürlichen Zuckern weitgehend ausgleichen.

Aus der DE-OS 33 31 517 ist ein Verfahren zur Verbesserung der geschmacklichen Eigenschaften von Acesulfam-K in Haushaltszubereitungen bekannt, wobei Acesulfam-K vor Gebrauch mit anderen Stoffen gleichmäßig abgemischt und in Form dieser Mischung verwendet wird. Zum Abmischen werden Aminosäuren oder Mischungen von Aminosäuren, vorzugsweise Glycin und Glutaminsäure oder Mononatriumglutamat, verwendet.

Weiterhin sind aus der DE-PS 25 60 544 und der DE-OS 25 56 109 gesüßte Nahrungsmittel bzw. modifizierte Süßstoffe bekannt, die Aspartam, gegebenenfalls in Mischung mit Saccharin, einem Cyclamat oder Saccharose, sowie als Geschmacksmodifiziermittel Kaliumaluminiumsulfat und/oder Naringin(Naringenin-5-rhamnosidoglucosid) in Mengen enthalten, die wirksam sind, um den anhaltenden süßen Nachgeschmack des obengenannten Süßstoffes zu modifizieren.

Die DE-OS 34 22 247 offenbart ein Verfahren zur Herstellung eines Trägers für Süßstoffe, bei dem ein spezielles Mono- oder Disaccharid mit einer wäßrigen Saccharoselösung zu einem Gluco-Oligosaccharid-Gemisch umgesetzt wird.

Die JP 59-154956 offenbart ein Süßungsmittel aus Acesulfam-K und Fructose.

Die bisher bekannten Süßstoffmischungen beziehen sich somit alle auf Mischungen aus synthetischen Süßstoffen mit definierten chemischen Verbindungen.

Aus der DE-AS 12 55 467 ist ein Verfahren zur Herstellung eines farblosen Süßungsmittels durch Zerkleinern von Kernobst, Erhitzen der Maische, Abtrennung, Reinigen und Eindicken des Saftes bekannt.

Die DE-OS 24 56 926 offenbart eine Süßstoffzubereitung, die als synthetischen Süßstoff Aspartam enthält, das in einem matrixbildenden Material eingeschlossen ist. Als matrixbildendes Material werden sogenannte Verschmelzungsmittel verwendet, die unter anderem Saftkristalle sein können. Ein Süßungsmittel mit verbessertem saccharoseähnlichem Geschmack wird dabei nicht erhalten.

Es ist wünschenswert, speziell die Saccharoseähnlichkeit des Geschmacks von Süßstoffmischungen noch zu verbessern, da der Süßgeschmack der Saccharose zum Leitbild für die Beurteilung der Süße aller Süßstoffe geworden ist.

Aufgabe der vorliegenden Erfindung ist es deshalb, ein Süßungsmittel und ein daraus hergestelltes Trockenprodukt mit verbessertem saccharoseähnlichem Geschmack zur Verfügung zu stellen sowie ein Verfahren zu ihrer Herstellung anzugeben.

Diese Aufgabe wird durch ein Süßungsmittel der eingangs genannten Art gelöst, das

a) mindestens einen synthetischen Süßstoff und
b) mindestens eine entaromatisierte und konzentrierte Fruchtzubereitung von 60 bis 80 ° Brix enthält.

Das erfindungsgemäße Trockenprodukt enthält ein solches Süßungsmittel und mindestens ein Trägermaterial.

Die Komponente a) in dem erfindungsgemäßen Süßungsmittel ist vorzugsweise Aspartam, Acesulfam-K, Natriumcyclamat oder Saccharin. Es können sowohl ein als auch mehrere dieser Süßstoffe zur Abmischung mit der Komponente b) verwendet werden. Vorzugsweise wird jedoch eine Mischung aus zwei Süßstoffen verwendet, welche besonders bevorzugt eine Mischung aus Aspartam und Acesulfam-K ist.

Als Komponente b) können ebenfalls eine oder mehrere entaromatisierte und konzentrierte Fruchtzubereitungen verwendet werden. Die Fruchtzubereitungen können sowohl aus hellfarbigen als auch aus dunkelfarbigen Früchten hergestellt werden. Zweckmäßigerweise werden Fruchtzubereitung aus hellfarbigen Früchten, insbesondere Apfel, Birne, Traube, Zitrone, Aprikose, Ananas und Orange, verwendet. Mischungen aus zwei Fruchtzubereitungen, wie Mischungen aus Birne und Ananas oder aus Traube und Orange, sind besonders geeignet. Diese Fruchtzubereitungen müssen 60 bis 80 ° Brix aufweisen.

Die Fruchtzubereitungen werden erhalten, indem Saftkonzentrate z. B. durch Filtration geklärt, durch Eindampfen im Vakuum entaromatisiert und gegebenenfalls durch Ultrafiltration bzw. Umkehrosmose konzentriert werden. Durch entsprechende Behandlung der so erhaltenen Konzentrate auf Ionenaustauschern wird deren Säuregehalt auf den gewünschten Wert eingestellt, und die Konzentrate werden, falls erforderlich, noch auf die gewünschte Trockenmasse gebracht. Die Gesamtsäuremenge, bestimmt als Titer (entsprechend ml 1N-KOH pro 10 g Fruchtzubereitung) liegt zweckmäßigerweise zwischen 0,01 und 6 ml 1N-KOH pro 10 g Fruchtzubereitung.

Die Menge der Komponenten a) und b) in dem erfindungsgemäßen Süßungsmittel hängt von dem jeweiligen Verwendungszweck der Mischung ab. Vorzugsweise werden 0,3 bis 10,0 Gew.-%, besonders bevorzugt 1,0 bis 6,0 Gew.-% der Komponente a) verwendet, wobei die Menge der Einzelkomponenten bei Verwendung einer Mischung aus zwei Süßstoffen bei jeweils 0,15 bis 5,0 Gew.-% liegen kann. Die Menge der Komponente b) liegt vorzugsweise bei 40,0 bis 98,0 Gew.-%, bezogen auf das Mittel.

Es ist bevorzugt, dem Süßungsmittel weiterhin Maltol zuzusetzen, da es den saccharoseähnlichen Geschmack des erfindungsgemäßen Süßungsmittels noch weiter verstärkt. Maltol wird vorzugsweise in einer Menge von 0,005 bis 1,0 Gew.-%, besonders bevorzugt in einer Menge von 0,025 bis 1,0 Gew.-%, bezogen auf das Mittel, verwendet.

Wird das erfindungsgemäße Süßungsmittel zum Süßen von flüssigen Lebensmitteln, insbesondere Getränken, verwendet, so kann es weiterhin Wasser und andere Zusätze, wie Ascorbinsäure, enthalten. Die Menge an Ascorbinsäure liegt vorzugsweise im Bereich von 0,1 bis 0,2 Gew.-%.

Es hat sich überraschenderweise gezeigt, daß das erfindungsgemäße Süßungsmittel einen stark verbesserten saccharoseähnlichen Geschmack im Vergleich zu bekannten Süßstoffmischungen besitzt. Aufgrund seiner synergistischen Verstärkung des Süßgeschmacks in der Mischung aus synthetischen Süßstoffen und der natürlichen Fruchtzubereitung kann eine erhebliche Stoffersparnis an synthetischen Süßstoffen erreicht werden, da die Fruchtzubereitung die Süße der synthetischen Süßstoffe wesentlich besser zur Geltung bringt gegenüber bekannten Süßstoffmischungen. So ist es ausreichend, Lebensmitteln 0,5 bis 1,8 Gew.-% des erfindungsgemäßen Süßungsmittels zur Erzielung einer saccharoseähnlichen Süße zuzusetzen.

Das erfindungsgemäße Süßungsmittel und das daraus hergestellte Trockenprodukt sind insbesondere zum Süßen von flüssigen Lebensmitteln, wie Getränken, oder Molkereiprodukten, wie Milcherzeugnissen mit einem Fettgehalt von 0,3 bis 10 %, z. B. Fruchtjoghurt oder Fruchtbuttermilch, oder Eisprodukten geeignet.

Das erfindungsgemäße Süßungsmittel kann sowohl in flüssiger als auch in fester Form verwendet werden. Das Trockenprodukt kann aus der flüssigen Mischung durch übliche Verfahren, wie Sprühtrocknung und/oder Vakuumtrocknung und/oder Trommeltrocknung und/oder Gefriertrocknung unter Verwendung geeigneter Trägermaterialien, wie Maltodextrin oder Lactose, erhalten werden. Vorzugsweise enthält das erfindungsgemäße Trockenprodukt 20 bis 40 Gew.-%, besonders bevorzugt 30 Gew.-% des Süßungsmittels und 60 bis 80 Gew.-%, besonders bevorzugt 70 Gew.-% des Trägermaterials.

Das erfindungsgemäße Trockenprodukt kann dann in Pulverform, in Granulatform, z. B. als Streusüße mit geringer Schüttdichte, oder nach Verpressung in Tablettenform verwendet werden.

Bei der Herstellung von Tabletten können dem erfindungsgemäßen Trockenprodukt, das die Mischung aus Süßungsmittel und Trägermaterial enthält, mindestens ein weiterer synthetischer Süßstoff, wie eine Mischung aus Aspartam und Acesulfam-K, sowie verschiedene Hilfsmittel, wie Verpressungshilfsmittel, z. B. Maisstärke, Sorbitol oder Pflanzenfette, oder geeignete Treibmittel, z. B. Weinsäure oder Natriumbicarbonat, zur Lösungsbeschleunigung zugesetzt werden. Vorzugsweise enthält eine solche Tablette dann 10 bis 40 Gew.-%, besonders bevorzugt 20 bis 30 Gew.-% der Mischung aus Süßungsmittel und Trägermaterial und 10 bis 40 Gew.-%, besonders bevorzugt 20 bis 30 Gew.-% des zugesetzten synthetischen Süßstoffs.

Zur Herstellung von Granulaten, wie Streusüße, kann dem erfindungsgemäßen Trockenprodukt ebenfalls mindestens ein weiterer Süßstoff zugesetzt werden. Das erhaltene Produkt enthält vorzugsweise 10 bis 30 Gew.-%, besonders bevorzugt 15 bis 25 Gew.-% der Mischung aus Süßungsmittel und Trägermaterial und 0,1 bis 5,0 Gew.-%, besonders bevorzugt 0,4 bis 3 Gew.-% des zugesetzten synthetischen Süßstoffs.

Das erfindungsgemäße Süßungsmittel und das erfindungsgemäße Trockenprodukt eignen sich sowohl als Produkt für die industrielle Lebensmittelindustrie als auch zur direkten Verwendung im Haushalt.

Um dem erfindungsgemäßen Süßungsmittel eine gute Löslichkeit, Stabilität sowie m krobiologische Stabilität zu verleihen, sollte vorzugsweise der Titer des Mittels bei 0,01 bis 6 ml 1N-KOH/10 g Mischung und der pH-Wert bei 2,8 bis 4,5 liegen.

Zur Herstellung des Süßungsmittels wird der pulverförmige synthetische Süßstoff, der gegebenenfalls mit Maltol und/oder Ascorbinsäure abgemischt worden ist, in der erfindungsgemäß verwendeten Fruchtzubereitung dispergiert und in Lösung gebracht. Anschließend wird die flüssige Dispersion pasteurisiert, wobei eine vollkommene Lösung der Süßstoffe herbeigeführt wird sowie die entsprechende mikrobiologische Stabilität erzielt wird, und gegebenenfalls das Produkt getrocknet.

Zur Herstellung des Trockenprodukts wird die vorstehende Lösung mit einem Trägermaterial versetzt. Das so erhaltene Produkt kann dann gegebenenfalls nach Trocknung in üblicher Weise granuliert werden oder nach Trocknung zu Tabletten verpreßt werden.

Die folgenden Beispiele erläutern die Erfindung.

## Beispiel 1

0,8 g Aspartam und 0,8 g Acesulfam-K werden in Pulverform mit 0,1 Gew.-% Ascorbinsäure vermischt und mit 100 ml Trinkwasser versetzt. Dazu werden 95 g einer Fruchtzubereitung aus Birnen- und Ananassaft (Mischungsverhältnis 1:1) gegeben, die durch filtrieren, Entaromatisieren und Konzentrieren auf 65 ° Brix eingestellt worden ist.

Die Mischung wird dispergiert und pasteurisiert. Das erhaltene Produkt weist einen pH-Wert von 4,0 und einen Titer von 4 ml 1N-KOH/10 g Süßungsmittel auf.

## Beispiel 2

1 g Aspartam und 1,5 g Acesulfam-K werden in 5 g Wasser dispergiert. Die Dispersion wird in 92,5 g einer Fruchtzubereitung aus Apfel- und Birnensaft (Mischungsverhältnis 1:1), eingerührt, die durch Filtrieren, Entaromatisieren und Konzentrieren auf 75 ° Brix eingestellt worden ist. Die Dispersion wird anschließend pasteurisiert, wobei sie in eine Lösung übergeht. Die so erhaltene Süßstofflösung weist einen pH-Wert von 2,8 und einen Titer von 6,0 ml 1N-KOH/10 g Süßungsmittel auf.

## Beispiel 3

a.) 1,5 % Aspartam und 6 % Acesulfam-K,
b.) 0,5 % Aspartam und 6 % Acesulfam-K,
c.) 1,2 % Aspartam, 1,2 % Acesulfam-K und 4,8 % Natriumcyclamat

werden in x g Wasser (x = 100 g - Süßstoffe - Fruchtzubereitung) dispergiert und in 85 g einer Fruchtzubereitung aus Apfel- und Zitronensaft eingerührt, die durch Filtrieren, Entaromatisieren, Entsäuern und Konzentrieren auf 75 ° Brix eingestellt worden ist. Die Dispersion wird anschließend pasteurisiert, wobei die Süßstoffe in Lösung gehen. Die so erhaltene Lösung weist eine pH-Wert von 3,4 und einen Titer von 0,9 ml 1N-KOH/10 g Süßungsmittel auf.

## Beispiel 4

a.) 0,45 % Aspartam und 0,45 % Acesulfam-K,
b.) 0,3 % Aspartam und 0,3 % Acesulfam-K und 0,35 % Saccharin

werden in x g Wasser (x = 100 g - Süßstoffe - Fruchtzubereitung) dispergiert und in 60 g einer Fruchtzubereitung aus Trauben- und Birnensaft (Mischungsverhältnis 2:1) eingerührt, die durch Filtrieren, Entaromatisieren, Entsäuern und Konzentrieren auf 75 ° Brix eingestellt worden ist.

Die Dispersion wird anschließend pasteurisiert, wobei sich die Süßstoffe lösen. Die so erhaltene Süßstofflösung weist einen pH-Wert von 4,2 und einen Titer von 0,3 ml 1N-KOH/10 g Süßungsmittel auf.

## Beispiel 5

0,8 g Aspartam und 0,8 g Acesulfam-K werden in Pulverform mit 0,05 Gew.-% Ascorbinsäure vermischt und in 3,3 Gew.-% Wasser suspendiert. Dazu werden 0,05 Gew.-% Maltol und 95 g einer Fruchtzubereitung aus Birnen- und Ananassaft (Mischungsverhältnis 2:1) gegeben, die durch Filtrieren, Entaromatisieren und Konzentrieren auf 65 ° Brix hergestellt worden ist.

Die Mischung wird dispergiert und pasteurisiert. Das erhaltene Produkt weist einen pH-Wert von 4,0 und eine Titer von 4 ml 1N-KOH/10 g Süßungsmittel auf.

## Patentansprüche

1. Süßungsmittel mit verbessertem saccharoseähnlichem Geschmack, enthaltend
   a) mindestens einen synthetischen Süßstoff und
   b) mindestens eine entaromatisierte und konzentrierte Fruchtzubereitung mit 60 bis 80 ° Brix.

2. Süßungsmittel nach Anspruch 1, dadurch gekennzeichnet, daß es eine Säurekonzentration, bestimmt als Titer, von 0,01 bis 6 ml 1N-KOH/10 g Mischung und einen pH-Wert von 2,8 bis 4,5 besitzt.

3. Süßungsmittel nach Anspruch 1 oder 2, dadurch gekennzeichnet, daß es weiterhin Maltol enthält.

4. Süßungsmittel nach einem der Ansprüche 1 bis 3, dadurch gekennzeichnet, daß die Komponente a) Aspartam, Acesulfam-K, Natriumcyclamat oder Saccharin ist.

5. Süßungsmittel nach Anspruch 4, dadurch gekennzeichnet, daß die Komponente a) eine Mischung aus Aspartam und Acesulfam-K ist.

6. Süßungsmittel nach einem der Ansprüche 1 bis 5, dadurch gekennzeichnet, daß die Komponente b) aus einer hellfarbigen Frucht hergestellt worden ist.

7. Süßungsmittel nach Anspruch 6, dadurch gekennzeichnet, daß die hellfarbige Frucht Apfel, Birne, Traube, Zitrone, Aprikose, Ananas oder Orange oder eine Mischung daraus ist.

8. Süßungsmittel nach einem der Ansprüche 1 bis 7, dadurch gekennzeichnet, daß es 0,3 bis 10,0 Gew.-% der Komponente a) enthält.

9. Süßungsmittel nach einem der Ansprüche 1 bis 8, dadurch gekennzeichnet, daß es 40,0 bis 98,0 Gew.-% der Komponente b) enthält.

10. Süßungsmittel nach einem der Ansprüche 1 bis 9, dadurch gekennzeichnet, daß es 0,005 bis 0,1 Gew.-% Maltol enthält.

11. Süßungsmittel nach einem der Ansprüche 1 bis 10, dadurch gekennzeichnet, daß es weiterhin Ascorbinsäure enthält.

12. Süßungsmittel nach einem der Ansprüche 1 bis 11, dadurch gekennzeichnet, daß es als Trockenprodukt vorliegt.

13. Trockenprodukt, enthaltend ein Süßungsmittel nach einem der Ansprüche 1 bis 11 und mindestens ein Trägermaterial.

14. Trockenprodukt nach Anspruch 13, dadurch gekennzeichnet, daß es 20 bis 40 Gew.-% des Süßungsmittels und 60 bis 80 Gew.-% des Trägermaterials enthält.

15. Trockenprodukt nach Anspruch 13 oder 14, dadurch gekennzeichnet, daß es in Tablettenform, Granulatform oder Pulverform vorliegt.

16. Trockenprodukt nach Anspruch 15, dadurch gekennzeichnet, daß es in Tablettenform weiterhin mindestens einen synthetischen Süßstoff und/oder mindestens ein Verpressungshilfsmittel und/oder ein Treibmittel enthält.

17. Trockenprodukt nach Anspruch 16, dadurch gekennzeichnet, daß es 10 bis 40 Gew.-% der Mischung aus Süßungsmittel und Trägermaterial und 10 bis 40 Gew.-% synthetischen Süßstoff enthält.

18. Trockenprodukt nach Anspruch 15, dadurch gekennzeichnet, daß es in Granulatform weiterhin mindestens einen synthetischen Süßstoff enthält.

19. Trockenprodukt nach Anspruch 18, dadurch gekennzeichnet, daß es 10 bis 30 Gew.-% der Mischung aus Süßungsmittel und Trägermaterial und 0,1 bis 5,0 Gew.-% synthetischen Süßstoff enthält.

20. Verfahren zur Herstellung des Süßungsmittels nach einem der Ansprüche 1 bis 12, dadurch gekennzeichnet, daß man mindestens einen pulverförmigen, synthetischen Süßstoff, gegebenenfalls Maltol und/oder Ascorbinsäure in mindestens einer entaromatisierten und konzentrierten Fruchtzubereitung mit 60 bis 80 ° Brix dispergiert und die Dispersion unter Lösung der Bestandteile pasteurisiert.

21. Verfahren nach Anspruch 20, dadurch gekennzeichnet, daß man die erhaltene Lösung trocknet.

22. Verfahren zur Herstellung des Trockenprodukts nach einem der Ansprüche 13 bis 19, dadurch gekennzeichnet, daß man das nach dem Verfahren gemäß Anspruch 20 hergestellte süßungsmittel mit einem Trägermaterial versetzt, und entweder trocknet und dann gegebenenfalls zu Tabletten verpreßt oder gegebenenfalls trocknet und gegebenenfalls in üblicher Weise granuliert.

23. Verwendung des Süßungsmittels nach einem der Ansprüche 1 bis 12 und des Trockenprodukts nach einem der Ansprüche 13 bis 19 im Haushalt oder bei der industriellen Lebensmittelherstellung, z. B. zum Süßen von flüssigen Lebensmitteln, insbesondere Getränken, sowie Molkereiprodukten und Eisprodukten.

## Claims

1. Sweetener with improved saccharose-like taste, comprising
   a) at least one synthetic sweetener, and
   b) at least one de-aromatised and concentrated fruit preparation of 60 to 80° Brix.

2. Sweetener according to claim 1, **characterised in that** it has an acid concentration, intended as titer, of 0.01 to 6 ml 1N-KOH/10 g mixture and a pH-value of 2.8 to 4.5.

3. Sweetener according to claim 1 or 2, **characterised in that** it also contains Maltol.

4. Sweetener according to one of claims 1 to 3, **characterised in that** the component a) is Aspartam Acesulfam-K, Sodiumcyclamat or saccharin.

5. Sweetener according to claim 4, **characterised in that** the component a) is a mixture of Aspartam and Acesulfam-K.

6. Sweetener according to one of claims 1 to 5, **characterised in that** the component b) is made of a bright-coloured fruit.

7. Sweetener according to claim 6, **characterised in that** the bright-coloured fruit is apple, pear, grape, lemon, apricot, pineapple or orange or a mixture thereof.

8. Sweetener according to one of claims 1 to 7, **characterised in that** it contains 0.3 to 10.0 weight-% of the component a).

9. Sweetener according to one of claims 1 to 8, **characterised in that** it contains 40.0 to 98.0 weight-% of the component b).

10. Sweetener according to one of claims 1 to 9, **characterised in that** it contains 0.005 to 0.1 weight-% Maltol.

11. Sweetener according to one of claims 1 to 10, **characterised in that** it also contains ascorbin acid.

12. Sweetener according to one of claims 1 to 11, **characterised in that** it is a dried product.

13. Dried product, containing a sweetener according to one of claims 1 to 11 and at least one base material.

14. Dried product according to claim 13, **charac-**terised in that** it contains 20 to 40 weight-% of the sweetener and 60 to 80 weight-% of the base material.

15. Dried product according to claim 13 or 14, **characterised in that** it is present in the form of tablets, granules or powder.

16. Dried product according to claim 15, **characterised in that,** when in tablet form, it further contains at least one synthetic sweetener and/or at least one compression aid and/or a propellant.

17. Dried product according to claim 16, **characterised in that** it contains 10 to 40 weight-% of the mixture of sweetener and base material and 10 to 40 weight-% synthetic sweetener.

18. Dried product according to claim 15, **characterised in that,** when in the form of granules, it additionally contains at least one synthetic sweetener.

19. Died product according to claim 18, **characterised in that** it consists between 10 to 30 weight-% of sweetener and base material and 0.1 to 5.0 weight-% of synthetic sweetener.

20. Method for the manufacture of the sweetener according to one of claims 1 to 12, **characterised in that** at least one synthetic sweetener in the form of powder, if appropriate Maltol and/or ascorbin acid, is dispersed in at least one de-aromatised and concentrated fruit preparation with 60 to 80° Brix, and the dispersion is pasteurised whilst dissolving the ingredients.

21. Method according to claim 20, **characterised in that** the obtained solution is dried.

22. Method for the manufacture of the dried product according to one of claims 13 to 19, **characterised in that** the sweetener, which has been manufactured according to the method of claim 20, is mixed with a base material and then either dried or, if appropriate, pressed as tablets or, if appropriate, dried and, if appropriate, granulated in a conventional manner.

23. Use of the sweetener according to one of claims 1 to 12 and of the dried product according to one of claims 13 to 19, in households or in the food-producing industry, for example for sweetening liquid foodstuffs, in particular drinks, as well as dairy products and ice products.

## Revendications

1. Edulcorant présentant un goût amélioré analogue à celui du saccharose, contenant
   a) au moins un édulcorant synthétique et
   b) au moins une préparation à base de fruits, désaromatisée et concentrée, à 60-80° Brix.

2. Edulcorant selon la revendication 1, caractérisé en ce qu'il a une concentration d'acide, déterminée en tant que titre, de 0,01 à 6 ml de KOH 1N par 10 g de mélange et un pH de 2,8 à 4,5.

3. Edulcorant selon la revendication 1 ou 2, caractérisé en ce qu'il contient en outre du maltol.

4. Edulcorant selon l'une des revendications 1 à 3, caractérisé en ce que le composant A est l'aspartam, l'acésulfam-K, le cyclamate de sodium ou la saccharine.

5. Edulcorant selon la revendication 4, caractérisé en ce que le composant A est un mélange d'aspartam et d'acesulfam-K.

6. Edulcorant selon l'une des revendications 1 à 5, caractérisé en ce que le composant B a été obtenu à partir d'un fruit de couleur claire.

7. Edulcorant selon la revendication 6, caractérisé en ce que le fruit de couleur claire est la pomme, la poire, le raisin, le citron, l'abricot, l'ananas ou l'orange ou un de leurs mélanges.

8. Edulcorant selon l'une des revendications 1 à 7, caractérisé en ce qu'il contient 0,3 à 10,0 % en poids du composant A.

9. Edulcorant selon l'une des revendications 1 à 8, caractérisé en ce qu'il contient 40,0 à 98,0 % en poids du composant B.

10. Edulcorant selon l'une des revendications 1 à 9, caractérisé en ce qu'il contient 0,005 à 0,1 % en poids de maltol.

11. Edulcorant selon l'une des revendications 1 à 10, caractérisé en ce qu'il contient en outre de l'acide ascorbique.

12. Edulcorant selon l'une des revendications 1 à 11, caractérisé en ce qu'il se présente sous forme d'un produit sec.

13. Produit sec contenant un édulcorant selon l'une des revendications 1 à 11 et au moins un matériau support.

14. Produit sec selon la revendication 13, caractérisé en ce qu'il contient de 20 à 40 % en poids de l'édulcorant et 60 à 80 % en poids du matériau support.

15. Produit sec selon la revendication 13 ou 14, caractérisé en ce qu'il se présente sous forme de comprimés, de granulés ou de poudre.

16. Produit sec selon la revendication 15, caractérisé en ce que, sous forme de comprimés, il contient en outre au moins un édulcorant synthétique et/ou au moins un auxiliaire de compactage et/ou un désintégrant.

17. Produit sec selon la revendication 16, caractérisé en ce qu'il contient 10 à 40 % en poids du mélange de l'édulcorant et du matériau support et 10 à 40 % en poids d'un édulcorant synthétique.

18. Produit sec selon la revendication 15, caractérisé en ce que, sous forme d'un granulé, il contient en outre au moins un édulcorant synthétique.

19. Produit sec selon la revendication 12, caractérisé en ce qu'il contient de 10 à 30 % en poids du mélange de l'édulcorant et du matériau support et de 0,1 à 5,0 % en poids d'un édulcorant synthétique.

20. Procédé de préparation de l'édulcorant selon l'une des revendications 1 à 12, caractérisé en ce qu'on disperse au moins un édulcorant synthétique pulvérulent, éventuellement du maltol et/ou de l'acide ascorbique, dans une préparation à base de fruits, désaromatisée et concentrée, à 60-80° Brix, et qu'on pasteurise la dispersion avec dissolution des constituants.

21. Procédé selon la revendication 20, caractérisé en ce qu'on sèche la solution obtenue.

22. Procédé de préparation du produit sec selon l'une des revendications 13 à 19, caractérisé en ce qu'on ajoute à l'édulcorant préparé par le procédé selon la revendication 20, un matériau support, et qu'on le sèche puis éventuellement le compacte pour obtenir des comprimés, ou encore on le sèche éventuellement et éventuellement on le granule de la manière usuelle.

23. Utilisation de l'édulcorant selon l'une des revendications 1 à 12 et du produit sec selon l'une des revendications 13 à 19, en économie domestique ou lors de la préparation industrielle de produits alimentaires, par exemple pour édulcorer des produits alimentaires liquides, en particulier des boissons, ainsi que des produits de laiterie et des produits de type glace.